# EUROPEAN PATENT APPLICATION

(11) **EP 1 422 645 A2**
(43) Date of publication of application: **26.05.2004**
(21) Application number: 03026152.3
(22) Date of filing: 13.11.2003
(51) Int. Cl.: G06F 17/60

(54) **Article information providing system and article information providing server**

(30) Priority: 20.11.2002 JP 2002336500
(71) Applicant: NEC CORPORATION, Tokyo (JP)
(72) Inventor: Okano, Yoichi, Tokyo (JP)
(74) Representative: VOSSIUS & PARTNER

(57) **Abstract**

An example of combination of goods is to be provided in real-time in an article information providing system and in an article information-providing server. A user terminal 1 of e.g. a mobile phone transmits the user's profile and the information of goods owned by the user over a network 2. A service provider server 4 provides the example of combination of the goods, using said user's profile and information of goods owned by the user, received from the user terminal 1 over the network 2, to transmit the example of combination of goods to the user terminal 1. The service provider server 4 uses said information of goods, received from the user terminal 1 to execute market analyses, and transmits the result of the market analyses to an advertiser terminal 3.

## Description

This invention relates to an article information providing system for providing the article information by exploiting a network, such as the Internet network, and to an article information-providing server convenient for the article information providing system.

Up to now, advertisements for articles, market searches or analyses exploiting questionnaire system for users, or management of the article information on the articles (goods, merchandises, commodities) purchased by the customers, are carried out by exploiting the Internet, for promoting purchases of articles (see for example the Patent Documents 1 to 5).

For example, in the Cited Reference 1, such articles as suited to the inclination of the user are selected, based on the user's transaction record, and the article information is provided as illustrative coordination suited to the user. By so doing, the user is able to obtain the information on the articles suited to his/her inclination.
Patent Document 1 JP-P2001-22831A
Patent Document 2 JP-P2002-183598A
Patent Document 3 JP-P2002-99840A
Patent Document 4 JP-P2002-230411A
Patent Document 5 JP-P2002-7679A

However, the conventional method for supplying the article information suffers from a problem that, since real-time market searches for articles or information analyses are infeasible, such that the results of the analyses cannot' be instantaneously reflected (changed or modified) on the advertisements with ease and hence an effective advertisement cannot be provided in real-time.

Moreover, it takes a lot of time for designing questionnaire for each article and collecting the resulting data, and hence, it takes a lot of time for making the market searches.

The above-described conventional method also suffers from a problem that, since it takes a lot of time for analyzing the results of questionnaire, and moreover the results of analyses, such as those of the geographical distribution of articles, cannot be output instantaneously, the results of the analyses of market searches for goods lack in real-time characteristics.

Consequently, when illustrative coordination is to be provided, as in the Patent Documents 1, it is not possible to follow up with changes in the user's inclination with time.

In view of the above depicted problems of the related art, it is an object of the present invention to enable provision of an example of combination of goods, on the real-time basis, in an article information providing system and in an article information providing server.

It is another object of the present invention to enable provision of an example of combination of articles, suited to a user, on the real-time basis.

It is yet another object of the present invention to enable market analyses on the real-time basis.

The present invention provides an article information providing system comprising portable terminal means for transmitting a profile of a user and information of articles of goods (termed "goods" herein) owned by the user over a network, coordination means for providing an example of combination of the goods owned by the user, using said user's profile and information of goods owned by the user, which have been received from said portable terminal means over said network, and combination information transmitting means for transmitting to said portable terminal means the example of combination of the goods provided by said coordination means. The portable terminal means transmits the user's profile and information of goods owned by the user over the network. The coordination means provides an example/examples of combination of goods using said user's profile and information of goods transmitted from the portable terminal means over the network. The combination information transmitting means transmits the examples of combination of goods provided by the coordination means to the portable terminal means.

The coordination means may include storage means for memorizing information of goods as information representing goods and a condition/conditions of combination of the goods. The coordination means can provide an example of combination of the goods based on the condition of combination of the goods using said user's profile and information of goods owned by the user received from said portable terminal means and the goods memorized in the storage means.

The goods owned by the user may be the information on the goods carried by the user.

The portable terminal means may include position information acquisition means for acquiring the position information of said portable terminal means, said portable terminal means transmitting the position information acquired by said position information acquisition means along with said user's profile and information of goods owned by the user. The coordination means then receives the position information over said network to provide the example of combination of the goods using said user's profile, information of goods and the position information received over said network.

The article information providing system may further include information requesting means for requesting information of goods owned by said user and the position information of the portable terminal means.

The portable terminal means on receipt of the request for the information from said information requesting means over said network transmitting said information of goods owned by the user over said network.

The combination information transmitting means may be responsive to the request received over said network to transmit the example of combination of the goods provided by said coordination means over said network to make advertisement.

The article information providing system may further include an advertiser terminal owned by an advertiser and market analysis means for acquiring said user's profile and the information of goods owned by the user from said portable terminal means, executing market analyses of the articles and transmitting the results of the market analyses over said network to said advertiser terminal.

The portable terminal means may transmit only a difference of information of goods or a difference of the position information over said network.

The portable terminal means may include goods information readout means for reading out information of goods from a carrier of information of goods mounted on goods and wherein the information read out by said goods information readout means is transmitted over said network.

The present invention also provides an article information providing server comprising coordinating means including storage means for memorizing information of goods as information representing goods and condition of combination of the goods, said coordinating means providing an example of combination of the goods received over said network and the goods stored in said storage means, based on said condition of combination of goods, using said user's profile and information of goods owned by the user, received over said network, and combination information transmitting means for transmitting the example of combination of goods provided by said coordination means over said network.

The coordination means provides an example/examples of combination of goods using said user's profile and information of goods transmitted from the portable terminal means over the network. The combination information transmitting means transmits the examples of combination of goods provided by the coordination means to the portable terminal means, over the network.

The goods owned by the user may be the information on the goods carried by the user.

The coordination means may further receive the position information over said network to provide the example of combination of the goods using said user's profile, information of goods and the position information received over said network.

The combination information transmitting means may be responsive to a request received over said network to transmit the example of combination of the goods provided by said coordination means over said network to make advertisements.

The article information providing system may further include an advertiser terminal owned by an advertiser and market analysis means for acquiring said user's profile and the information of goods owned by the user from said portable terminal means, executing market analyses of the articles and transmitting the results of the market analyses over said network to said advertiser terminal.

The article information providing server may further include market analysis means for acquiring said user's profile and the information of goods owned by the user, to execute market analyses of the articles and transmitting the results of the market analyses over the network to an advertiser terminal owned by an advertiser.
The invention is further disclosed with reference to the drawings:
Fig.1 is a block diagram of an article information providing system according to a first embodiment of the present invention.
Fig.2 illustrates the operation of the first embodiment of the present invention.
Fig.3 illustrates the operation of the first embodiment of the present invention.
Fig.4 is a flow diagram for illustrating the operation of the first embodiment of the present invention.
Fig.5 is a flow diagram for illustrating the operation of the first embodiment of the present invention.
Fig.6 illustrates the operation of the first embodiment of the present invention.
Fig.7 is a flow diagram for illustrating the operation of the first embodiment of the present invention.
Fig.8 is a flow diagram for illustrating the operation of the first embodiment of the present invention.
Fig.9 is a flow diagram for illustrating the operation of the first embodiment of the present invention.
Fig.10 illustrates the operation of the first embodiment of the present invention.
Fig. 11 is a flow diagram for illustrating the operation of the first embodiment of the present invention.
Fig.12 illustrates the operation of the first embodiment of the present invention.
Fig.13 illustrates the operation of a second embodiment of the present invention.

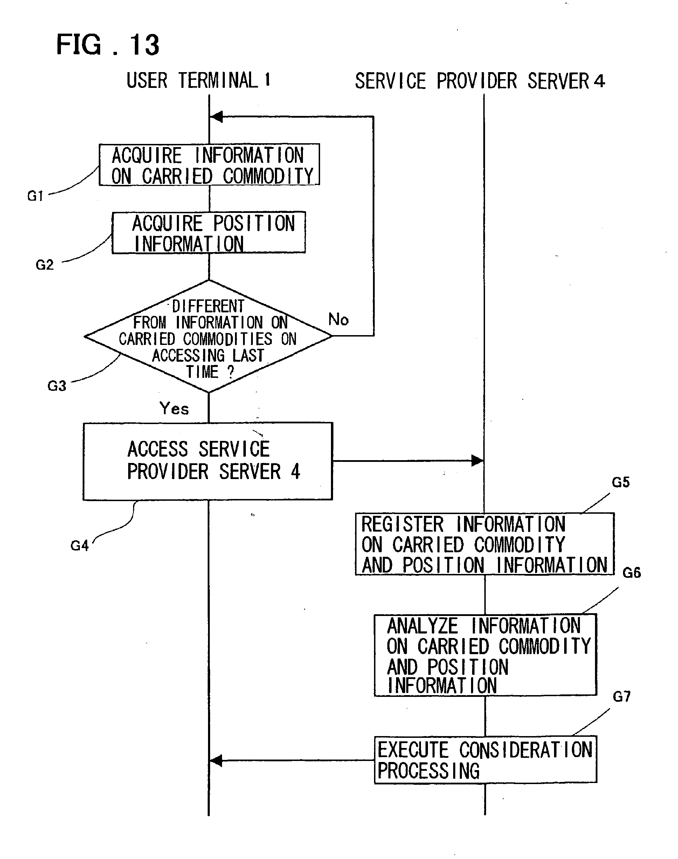

Fig.13 illustrates the operation of a third embodiment of the present invention.

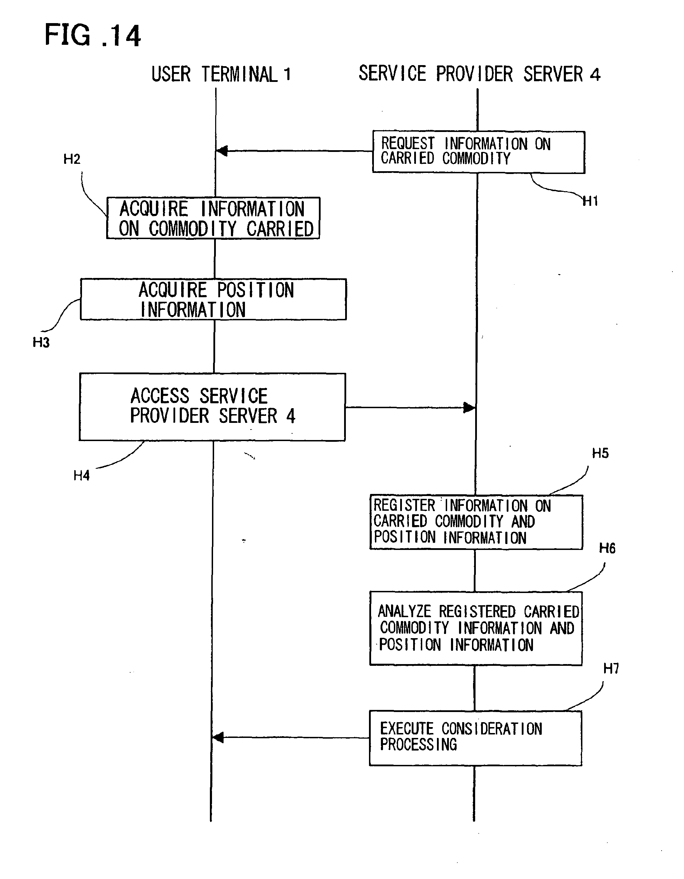

Fig. 14 is a flow diagram for illustrating the operation of the third embodiment of the present invention.

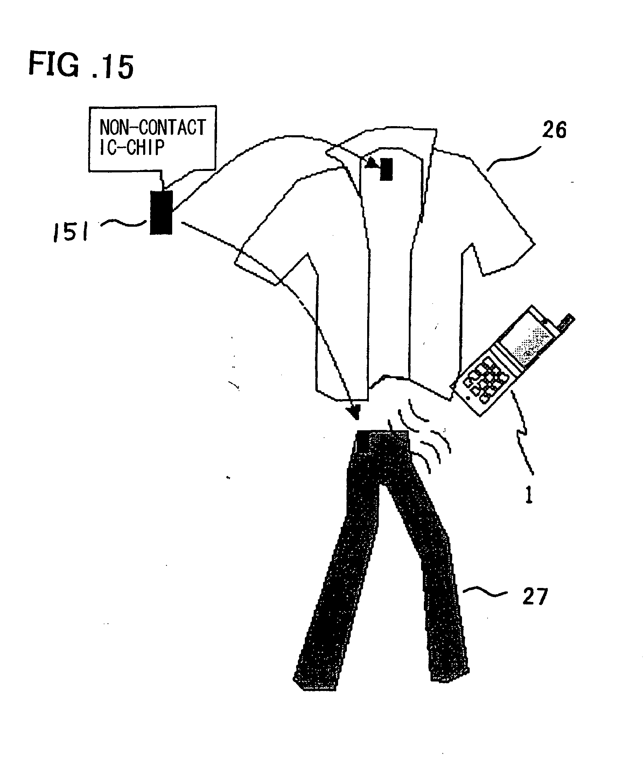

Fig. 15 is a flow diagram for illustrating the operation of a fourth embodiment of the present invention.

The schematics of embodiments of the present invention will be explained as follows. The present embodiments of the present invention provides an article information providing system and an article information providing server exploiting an accessing method over the Internet employing the portable communication equipment, such as a mobile phone, PHS (Personal Handyphone System), a portable information terminal having communication function (PDA) or wireless LAN (mobile Internet access).

The present embodiments also provide an article information supplying method which provides the article information using the mobile Internet accessing method.

The present embodiments also provide an advertisement business method for making advertisement of goods using the mobile Internet access method and a method for acquisition of the article information using the mobile Internet access method.

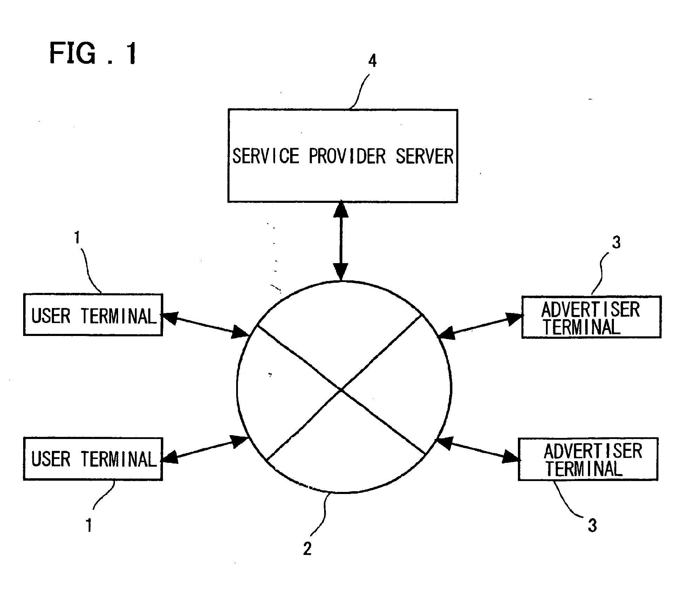

In the present embodiment, as shown in Fig.1, a user registers the information of the goods he/she carries, such as apparel, accessories, headphone stereo units or mobile phones, he/she owns, in a service providing server (article information providing server) 4, over the Internet (network) 2, by exploiting a mobile Internet accessing function of a user terminal 1 (portable terminal means) (the accessing function via the Internet owned by the portable communication equipment). The service provider analyzes the information as to position distribution, sex, age group or combination (coordination) to supply the information over the Internet (network) 2 to an advertiser (specifically an advertiser server 3). When providing the information, the service provider may collect the fee from an advertiser. The advertiser can exploit these information for developing own articles or sales strategies.

The user may receive the point or fee for providing the information, as a reward for the information provided. If the consideration is the points, these points may be saved to request exchange for articles or cash. The user is also able to receive e.g. the position distribution of the apparel or the accessories, as analyzed by the service provider, through mobile Internet accessing, and to use the received information as an information source when selecting his/her own fashion (coordination) or the goods he/she carries (that is, to follow the real-time vogue).

For example, if the user accesses a service provider server 4, over a network 22, by exploiting a user terminal 1, to retrieve an 'accessory' worn preferentially by a 'male' 'teenager' in the neighborhood of a 'movie theater' of 'Shibuya' , the service provider server 4 provides the relevant information.

In retrieval, the user can retrieve, in a similar manner, the information of an article which the advertiser asked the service provider to register at the outset, that is, which was registered in the service provider server 4. By this service, the user is able to follow the fashion as he/she intends the target persons who is retrieved or to acquire the information of the goods in which he/she is interested. The service provider is able to collect the fee for providing the information services when he/she is exploiting the retrieval services.

An advertiser may request the service provider to make advertisements, while the information on the new goods/products, for which the request has been made for advertisement, may be introduced by the service provider to the user as an example of combination of goods/products, in order to achieve an outstanding advertisement effect. For example, extremely effective advertisement may be made by presenting, as an image, an example of combination of new goods/products with the apparel owned by the user and which was already registered with the service provider server 4. On the other hand, the user is able to scrutinize new goods/products as he/she has taken the coordinates with apparel he/she owns into account. In registering new goods/products in the service provider server 4, the service provider may collect the fee from the advertiser.

In Fig.1, the user terminal 1 is a portable terminal means having position information acquisition means for acquiring the position information of the own terminal, such as a mobile phone, PHS or PDA. The user of the present service makes user registration with the service provider server 4 on the user terminal 1 over the network 2. In making the registration, the user registers the information representing the user (profile), such as sex, age and inclination. The service provider server 4 may exploit the information in analyzing the registered information. For example, the service provider server 4 may provide data, such as fashion of or goods carried by 'women' in their 'twenties' fond of 'cinema', to the advertiser.

The user registers the user terminal information of the own user terminal 1 in storage means for a database, provided in the service provider server 4, over the network 2. (In the instant embodiment, the network 2 is the Internet, as an example). The numbers of the user terminal 1 and the advertiser terminals 3 are optional, provided that these are not less than 1, such that these are not limited to those shown in Fig.1. In the user terminal information, there are included the user's name, E-mail address, current position, sex, age or inclination. There may also be included in the name the handle name or identification number for user identification. That is, the user's profile or the position information of the user terminal 1 is included in the user terminal information. The user terminal 1 may be exemplified by a portable telephone terminal or a PHS terminal having the function of acquiring the current position information, employing the portable telephone network or a GPS function. These terminals register the own position information with the service provider server 4 from time to time or periodically.

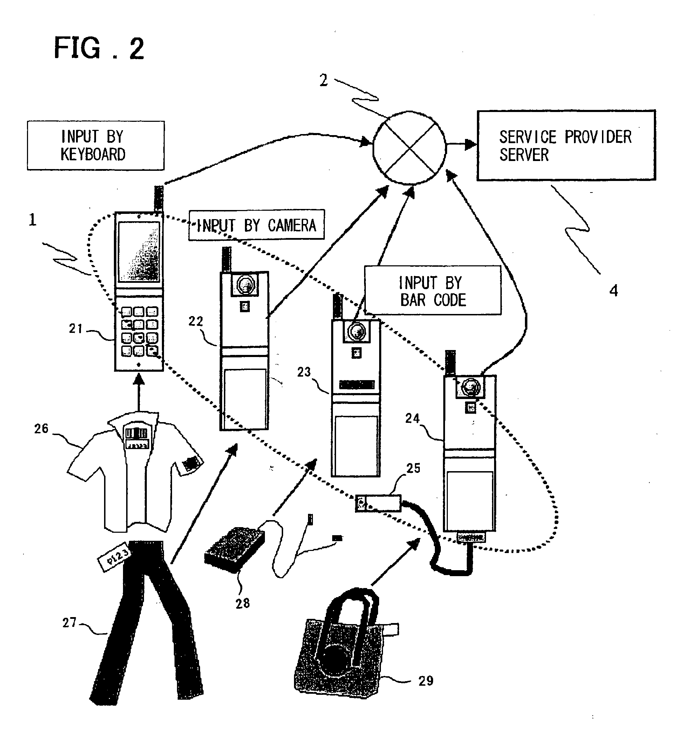

The user registers the information of goods, such as apparel he/she carries. Fig.2 shows, as examples of the portable terminal 1, as user terminal, a portable terminal 21 for entering information of the goods, by a keyboard, as goods information inputting means, portable terminals 22, 23, having cameras as goods information readout means and adapted for entering information of the goods from these cameras, and a portable terminal 24 having a bar code reader 25 as goods information readout means and adapted for entering information of the goods using the bar code.

The registration is made on the service provider server 4 over the network 2, by entering information of the goods via a keyboard of the portable terminal 21, or by reading in the identification number or the identification code, such as a bar code, provided to a tag (carrier of information of goods), attached to goods 26 to 29 from the outset, by a camera or a bar code reader, enclosed in the terminal.

In making the registration, reward may be paid to the user in the form of cash or points or the like. The bar code as the identification code may be a pre-existing bar code used for article management. The service provider classifies or coordinates the above variable information according to categories and provides the so classified or combined information to the advertiser. The fee for providing the information may be collected from the advertiser. These informations may also be provided to entrepreneurs other than the advertiser.

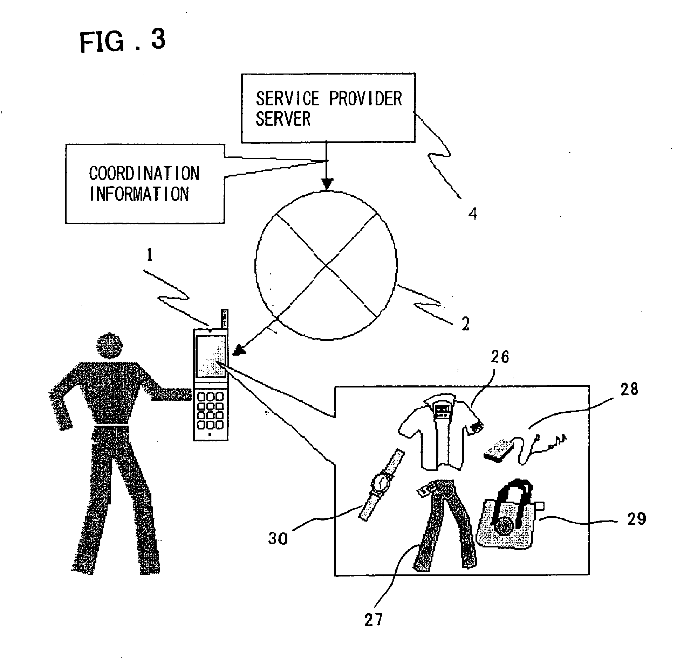

Referring to Fig.3, the service provider attaches the identification numbers or codes, such as bar code, at the outset to the goods for which the advertiser requested the advertisement, in order that the service provider server 4 is able to handle the relevant information easily. That is, the information of other goods combined with these goods as well as the combination information representing the condition/conditions of combination of goods is/are stored from the outset in storage means in the service provider server 4.

The aforementioned information of goods or the condition/conditions for goods combination may be provided from the advertiser server 3 over the network 2 to the service provider server 4 so as to be stored in storage means in the service provider server 4.

The service provider server 4 acquires an example of combination of goods, suited to a user, using the aforementioned conditions for combination and information of the goods owned by the user, by the coordinating means, to provide information of the coordination to the user by the combination information transmitting means. This assures a positive advertisement event for the users.

The present invention is hereinafter explained in detail with reference to certain preferred embodiments thereof.

Referring to Fig.1, showing a first embodiment of the present invention, there is shown an article information providing system including a plural number of user terminals 1, as a portable terminal means, formed a mobile phone, a PHS, PDA or the like, having a position information acquisition means of an own terminal, a communication network 2, such as the Internet, a plural number of advertiser terminals 3, as terminals used by the advertiser requesting the advertisement, and a service provider server 4, as an article information providing server employed by a service provider who renders article information providing services.

The service provider server 4 includes a coordinating means having storage means for storing the article information, as information representing the goods, and the conditions of combination of the goods, and a combination information transmitting means for transmitting an example of combination of the goods, combined by the coordinating means, over the network. The coordinating means uses the user's profile and information of the goods owned by the user, both received over the network, to produce an example of the combination of the goods received over the network, and the goods stored in the storage means, based on the aforementioned conditions of combination of the goods. The service provider server 4 also includes an information requesting means for requesting the information of the goods owned by the user and the position information to the user terminal 1.

The aforementioned coordinating means includes storage means for storage of information of the goods and the conditions of combination (coordination information) and, using the user's profile and information of the goods, received over the network 2, acquires an example of combination of the goods received over the network 2, and the goods stored in the storage means based on the aforementioned conditions of combination.

The goods owned by the user may be the goods currently carried by the user.

The aforementioned coordination means further receives the position information of the user over the network to execute coordination using the user's profile, information of the goods and the position information. The combination information transmitting means also is responsive to a request received over the network 2 to transmit the example of the combination, provided by the coordination means, over the network 2, by way of advertisement. The aforementioned coordination means further includes a market analysis means for acquiring the user's profile and the information of the goods, owned by the user, to execute market analysis of the articles, and for transmitting the result of the market analysis over the network 2 to the advertiser terminal 3 used by the advertiser.

The user terminal 1 is a terminal having a function of acquiring the position information of an own terminal. The user terminal is now explained with reference to a mobile phone having, as a means for acquiring the current position information, a GPS (global positioning system) or a position information acquisition means by a mobile network, and a PHS terminal, capable of grasping the position information, taken as examples.

The user terminal 1 accesses the service provider server 4 over the network 2 to upload the user registration or the registration of the goods the user carries or to download the advertisement data including information of combination of the goods or the following. There is no particular limitation to the uploading or downloading means, such that any suitable means, such as E-mail or WEB access by TCP/IP, may be used. It is noted that the network 2 referred to in the relevant explanation includes the Internet and a mobile network for e.g. mobile phones.

The advertiser uses the advertiser terminal 3 and requests the service provider server 4 to make advertisements of goods over the network 2. Among the uploaded data, there are such informations as the article code, photos, specifications or prices of the goods, or the sales channel. There may also be examples of apparel coordination, as later explained.

The service provider server 4 stores the user information, user's profile, the information of the goods carried by a user, the advertiser's profile, advertiser terminal information, or information of the goods, as uploaded, in its storage means, and supervises these stored information. The service provider server 4 analyzes these information to perform analysis of marketability of goods by the geographical distribution of goods, combined with the user position information and information of the goods carried by the user, user distribution by age or sex, taken alone or in combination, as well as to perform management of examples of combinations of the goods. The coordination information may be provided by the advertiser or by the service provider. Moreover, the coordination information may use the results of analyses conducted by a third party, such as market research firm, magazine publisher or an expert journal publisher, taken alone or in combination, as obtained by the service provider by outsourcing to these organizations.

The service provider server 4 is responsive to a request from the advertiser or other entrepreneurs to download information of the goods carried by the user, or the information on the results of analysis of marketability of the goods.

The service provider server 4 also has mounted thereon the functions of compensation processing for the user, by cash or points, for user registration, uploading of the registration of the goods carried by the user, and billing processing for downloading of advertising data, including the combination information or coordination information or the like (the user may not be billed). The service provider server 4 also has mounted thereon the functions of billing processing for requests from the advertiser terminal 3 for advertisements, and of billing processing in downloading information of the goods carried and the information on the results of analyses of marketability of the goods, responsive to requests from the advertiser terminal 3 and other entrepreneurs. There is no limitation to the means for settlement, which may for example be electronic money, settlement by credit cards or transactions by the electronic accounts, which allow charging via on-line.

The operation of the embodiments of the present invention is now explained in detail. In the following explanation, it is assumed that a user terminal network 2 is the Internet that includes a mobile phone and a PHS network (referred to below as mobile network), and that the user terminal 1 is a mobile phone terminal or a PHS terminal that is able to acquire the own position information, from time to time, by the GPS function and the mobile network.

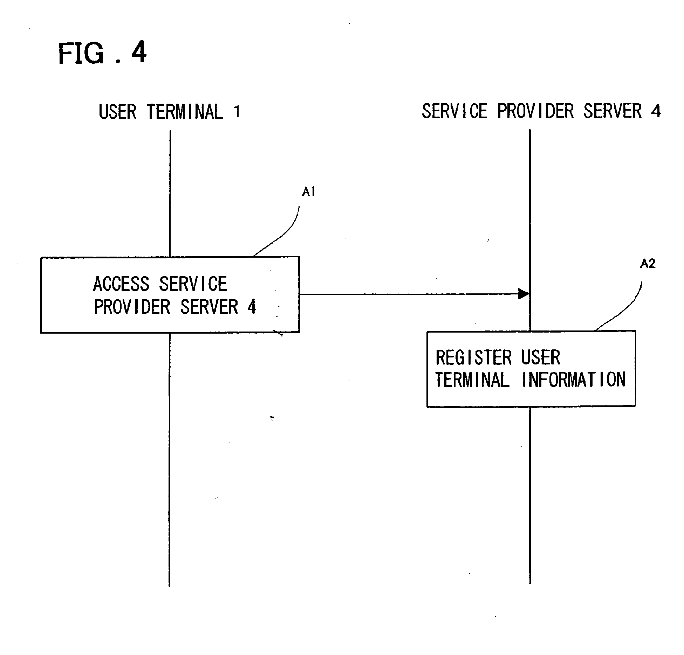

Referring to Figs.1 to 5, the sequence of operations for registering the user terminal information in a service provider terminal 4 is now explained. The user accesses the service provider terminal 4, over the network 2, using the user terminal 1, to make registration of the user terminal information, such as the user's profile (the information pertinent to the user, such as identification number peculiar to the user, age, sex or inclination of the user) (step A1 of Fig.4). The service provider terminal 4 registers the user terminal information in its storage means (e.g. a database) (step A2). The user terminal information contains the user's profile, such as the user's own name (inclusive of a handle name and number for user identification), age, sex, profession and inclination, first of all, and other information, such as the user's E-mail address, current position, the goods he/she owns, etc. These are merely illustrative, such that all of these are not needed.

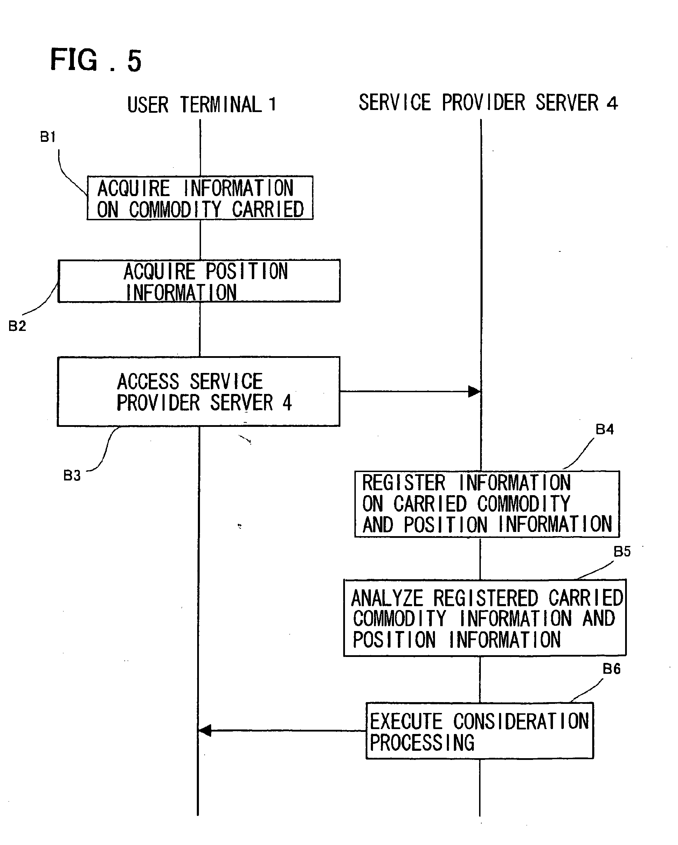

Referring to Fig.5, the processing for e.g. uploading the information of the goods carried by the user or the user's current position is explained.

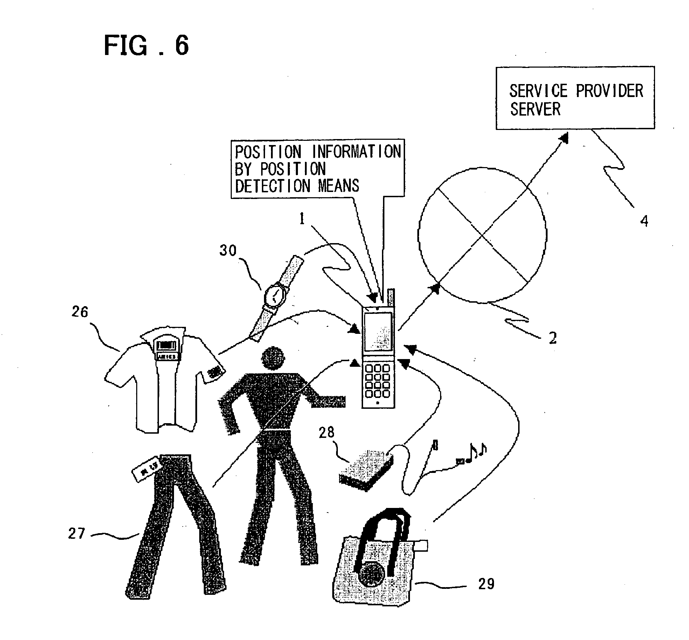

The user takes in information of the goods he/she owns (for example, a jacket 26, trousers, cassette player 28, a bag 29 or a wrist watch 30), using portable terminals 21 to 24, as a sort of the user's terminal 1, as shown in Fig.2, by inputting information of the goods by a keyboard, as goods information inputting means or by taking in the identification number or code attached to the goods from the outset, with a camera or a bar code reader 25, as goods information readout means, enclosed in the terminal (step B1 of Fig.5). After taking in the position information of the user terminal 1 (step B2), the user accesses the service provider server 4 over the network 2 to transmit the information of the goods he/she carries as well as information on the current position (step B3). The service provider server 4 registers the received information of the goods and the position information in the storage means (step B4). The step B2 represents the position information acquisition means. Fig.6 shows the above-described processing operations.

The service provider server 4 analyzes the registered user terminal information and information of the goods carried by the user, according to the sex and the age, and memorizes the results of analyses in a storage means of the service provider server 4 to manage the so memorized results of analyses (step B5). After the analyses, the service provider server 4 executes compensation processing for the user who has provided the information (step B6). Examples of the compensation processing may include supplying premiums or cash in accordance with a point system. This processing includes transmitting the results of point addition or the results of cash payment to the user terminal 1.

Since the steps B2 to B6 are repeated from time to time or periodically, so that the position of the user terminal 1 and information of the goods carried by the user are grasped at all times by the service provider server 4.

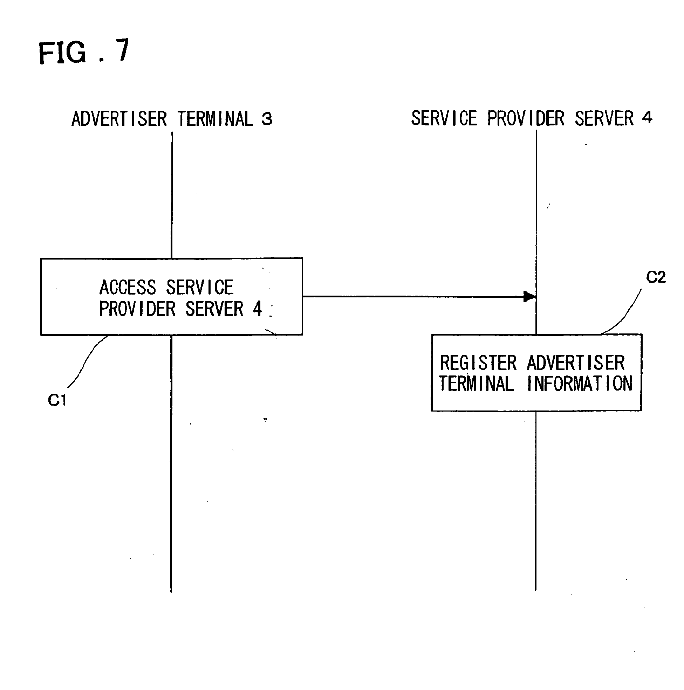

Referring to Fig.7, the sequence of operations for the advertiser terminal 3 to register the advertiser terminal information with the service provider server 4 is now explained. As in registering by the user terminal 1, the advertiser accesses the service provider server 4, over the network 2, using the advertiser terminal 3, to transmit the advertiser terminal information (step C1). The service provider server 4 registers the advertiser terminal information in its own storage means (step C2). The advertiser terminal information contains the information for identifying the advertiser (e.g. name, code or symbol).

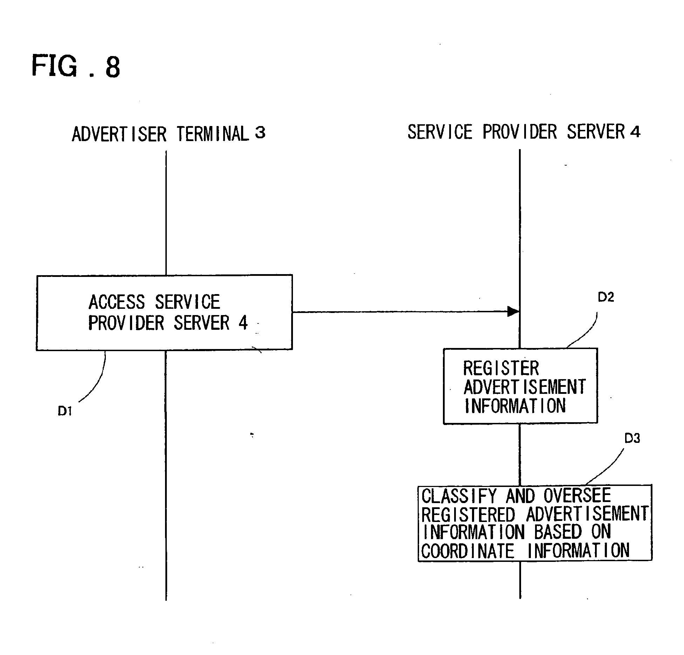

Referring to Fig.8, the sequence of operations when the advertiser registers the advertisement information with the service provider server 4 over the network 2, with the use of the advertiser terminal 3, is explained. The advertiser terminal 3 accesses the service provider server 4 over the network 2 to upload the advertisement information (step D1). The service provider server 4 registers the advertisement information in its storage means (step D2) and, based on the coordination information (sorts of goods and combination conditions), classifies and manages the advertisement information (step D3). The coordination information may be formulated by the advertiser and/or by the service provider, and/or may use the results analyzed by a third party.

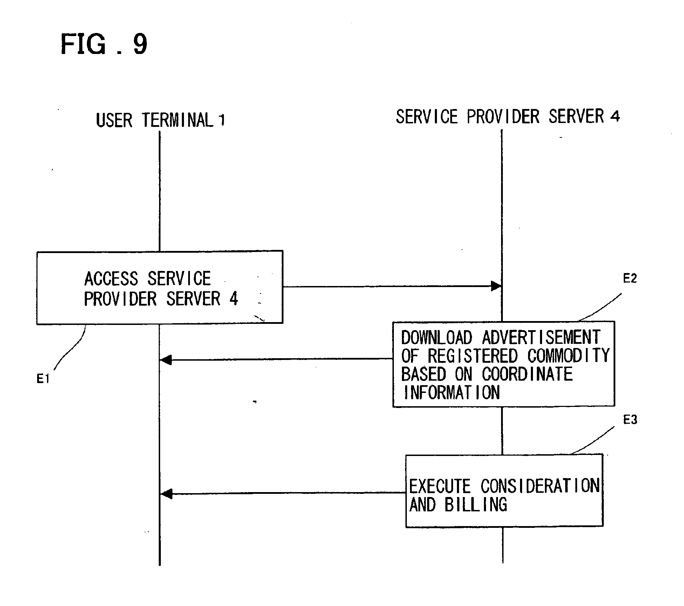

Referring to Fig.9, the processing for a user to request examples of combination of the goods is now explained. The user accesses the service provider server 4, using the user terminal 1 (step E1). In this case, the user may directly designate the data he/she wants to acquire or may request advertisement by combination examples. When the user directly specifies the desired data, he/she can makes retrieval by such a route as 'accessories' preferentially worn by a 'male' of a 'teenager' in the neighborhood of a 'cinema theater' of 'Shibuya'.

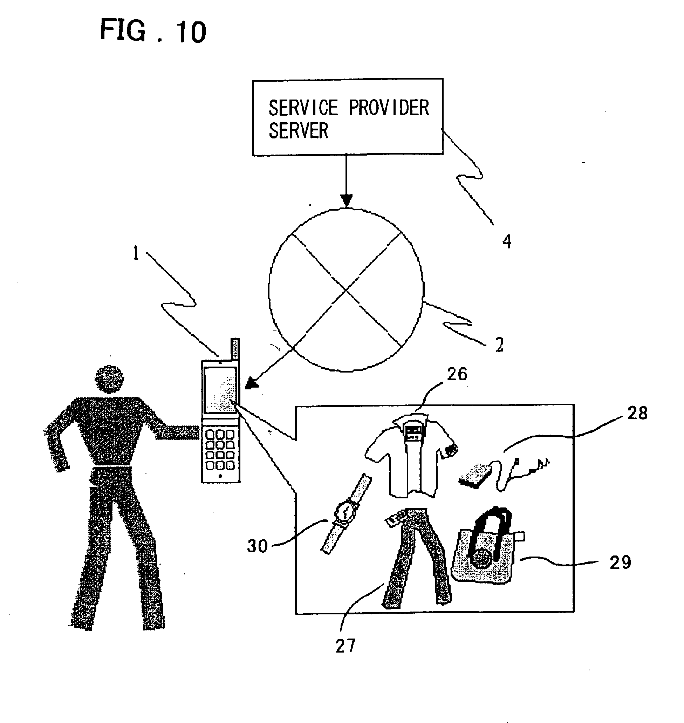

On receipt of a request for a combination example for a specified goods from a user, the service provider server 4 acquires a combination example for the specified goods, based on the conditions of the combinations stored in the storage means, using the user's profile and information of the goods, both stored in the storage means, to download the combination example to the user terminal 1 (step E2). In this case, the information of the goods registered by the advertiser is exploited and the names, price and the sales channel of the goods are indicated simultaneously. It is noted that the step E2 represents the coordinating means for providing the examples of combinations of the goods for the user. The step E2 also represents a combination information transmitting means for transmitting the examples of combination to the user terminal 1. Fig.10 shows the manner of processing in Fig.9.

The service provider server 4 may provide the examples of combination for a fee or may compensate points or cash for browsing the advertisements. In this case, the service provider server may perform the processing of making compensation for the user or billing the user (step E3).

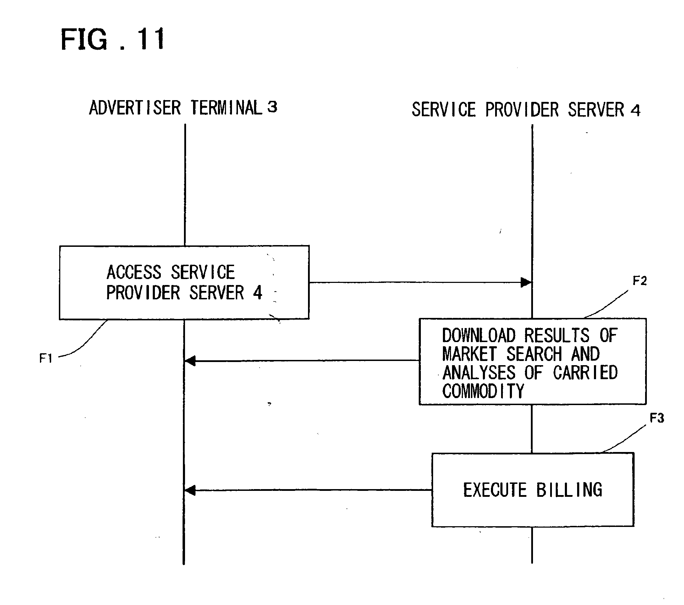

Referring to Fig.11, the processing until the advertiser acquires information of the goods carried by the user, as analyzed by the service provider server 4, is now explained.

Using the advertiser terminal 3, the advertiser accesses the service provider server 4 over the network 2, and requests downloading of the results of market analyses (step F1). Meanwhile, in accessing the service provider server 4 from the advertiser terminal 3, the information specifying the sort of the information of market analyses, downloaded from the service provider server 4, is transmitted to the service provider server 4.

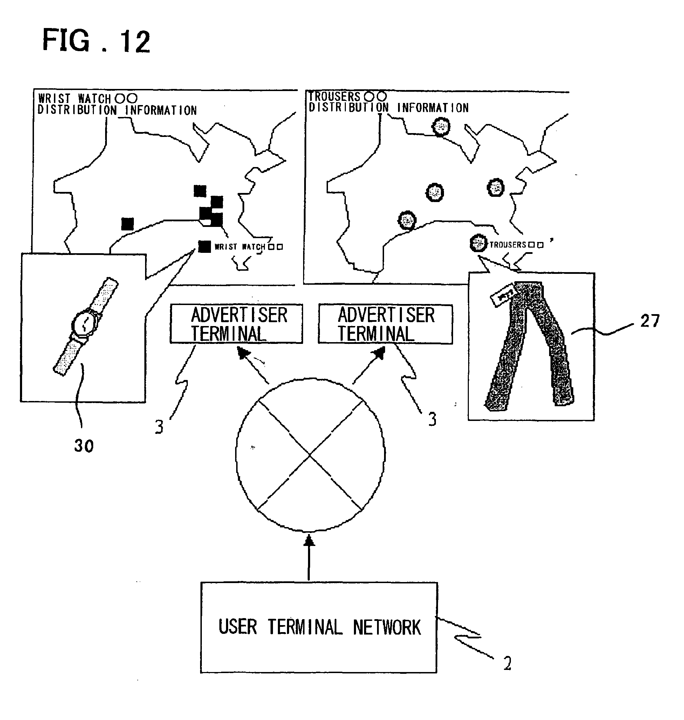

The service provider server 4 executes market search for the articles/goods carried by the user, or analyzes the market, responsive to the request from the advertiser terminal 3, downloads the results to the advertiser terminal 3 (step F2) and performs processing of billing the advertiser terminal 3 (step F3). It is noted that the step F2 represents market analysis means and combination information transmitting means. The state of the step F2 is shown in Fig. 12, in which there is shown an example of providing the geographical distribution of a wristwatch 30 and trousers 27 to the advertiser terminal 3.

Up to now, advertisements for goods could be made by an information medium, such as a magazine. However, the advertisement information in the information medium may be provided every week at most, while real-time information provision was difficult. Moreover, showing a combination example with the goods owned by the user is difficult. According to the present first embodiment, it becomes possible for an advertiser to make effective real-time goods/products advertisement, by combining the goods carried by the user with other goods, based on the information of combination examples of the goods.

Moreover, it becomes possible for the service provider server 4 to make real-time analysis of the geographical distribution of the articles/goods, user layer (sex, age etc.) or the purchaser layer, while it becomes possible for the advertiser to exploit the information on the real-time articles/goods analyses for creating the articles/goods.

Moreover, the user is able to select the purchase of goods, as he/she selects the goods he/she desires to purchase, as the examples of combinations of the goods with the goods he/she owns, based on the information of combinations of the goods, supplied from the server 4, so that it is possible for the user of the present services to purchase the goods effectively.

Additionally, since it is possible for the service provider server 4 to obtain the position information (the geographical distribution of the goods) and the information of the goods carried by the user, over the network 2, in real-time, and to analyze the information instantaneously. This improves up-to-date characteristics of the results of market research and analyses, so that these information becomes a more attractive information with a high added value for the advertiser and other entrepreneurs that are in need of these information, as a result of which it becomes possible to research the market and analyze the articles/goods in real-time, thus raising the added value of these information.

Referring to Fig.13, the second embodiment of the present invention is explained in detail. In the present embodiment, a program is installed on the user terminal 1 and only the difference of the position information and information of the goods carried by the user is uploaded to the service provider server 4. In the above-described first embodiment, the position information and information of the goods carried by the user are uploaded in their entirety. In the present second embodiment, these informations are uploaded only when the difference is produced in the user terminal 1. With the present embodiment, it is possible to eliminate unneeded uploading to diminish the communication expenses incurred to the user. Such reduction in the communication expenses is enabled even in case it is the service provider who sustains the communication expenses.

The operation of the present second embodiment is hereinafter explained. The block diagram in the present second embodiment is the same as that shown in Fig.1.

Referring to Fig. 13, only the difference from the above-described first embodiment is mainly explained. The present second embodiment differs from the first embodiment as to steps B1 to B6 indicated in Fig.5. A step G3 is newly added step. The user terminal 1 stores information of the goods and the position information, obtained on accessing the server 4 last time and updated, in its storage means.

When the position information or information of the goods carried by the user, and which has been newly registered in the user terminal 1, is the same as that uploaded on accessing the service provider server 4 last time, that is, when the newly registered information is of the same contents as those of the information stored in the storage means, the service provider server 4 is not accessed (step G3, no).

When the position information or information of the goods carried by the user, and which has been newly registered in the user terminal 1, is different from that uploaded on accessing the service provider server 4, the user terminal 1 accesses the service provider server 4 to upload information of the goods carried by the user and the position information (step G3, yes, step G4). The other processing is similar to that stated in the above-described first embodiment.

Referring to Fig. 14, a third embodiment of the present invention is explained in detail. It is noted that the block diagram of the third embodiment is the same as that of Fig.1.

In the present third embodiment, information of the goods carried by the user, and the position information, are acquired from the user on request from the service provider server 4. The present third embodiment differs from the above-described first embodiment as to the steps B1 to B6 of Fig.5.

A step H1 is added, in which the service provider server 4 requests information of the goods carried by the user and the position information to the user terminal 1. The step H1 constitutes the information requesting means. The other processing performed in the present embodiment is otherwise the same as that in the above-described first embodiment. The present third embodiment allows for not only data collection on accessing by the user but also real-time data collection by a request from the service provider.

Referring to Fig.15, a fourth embodiment of the present invention is explained in detail. It is noted that the block diagram of the fourth embodiment is the same as that of Fig.1.

In the present fourth embodiment, a non-contact integrated circuit (IC) chip 151, as a goods information carrier, having stored therein the goods information, is mounted on goods, in place of a bar code or an identification code, while there is enclosed in the user terminal 1 a reader/writer, as goods information readout/write means, by which the goods information stored in the IC chip 151 may be read out in a contact-free manner, or by which the goods information can be written on the IC chip 151 in a contact-free manner. By reading the goods information, stored in the IC chip 151 by the reader/writer, the labor of inputting information of the goods carried by the user may be saved appreciably. The other processing is similar to that stated in the above-described first embodiment.

The meritorious effects of the present invention are summarized as follows.

According to the present invention, the variable combination of goods may be provided in real-time in the article information providing system and in the article information-providing server.

Since a portable terminal capable of acquiring the position information is used as a user terminal acting as an information supplying source, a large variety of the information, to say nothing of the position information, can be acquired in real-time, thus allowing for market analyses in real-time.

Moreover, the orientation of the advertisement can be instantaneously changed depending on the changes in information of the goods combinations or on the results of the real-time analyses.

It should be noted that other objects, features and aspects of the present invention will become apparent in the entire disclosure and that modifications may be done without departing the gist and scope of the present invention as disclosed herein and claimed as appended herewith.

Also it should be noted that any combination of the disclosed and/or claimed elements, matters and/or items may fall under the modifications aforementioned.

## Claims

1. An article information providing system comprising
portable terminal means for transmitting a profile of a user and information of goods owned by the user over a network;
coordination means for providing an example of combination of the goods owned by the user, using said user's profile and information of goods owned by the user, which have been received from said portable terminal means over said network; and
combination information transmitting means for transmitting to said portable terminal means the example of combination of the goods provided by said coordination means.

2. The article information providing system as defined in claim 1 wherein
said coordination means includes storage means for memorizing information of goods as information representing goods and a condition of combination of the goods, and based on the condition of combination of the goods, using said user's profile and information of goods owned by the user received from said portable terminal means, said coordination means providing the example of combination of the goods received from said portable terminal means and the goods memorized in said storage means.

3. The article information providing system as defined in claim 1 or 2 wherein information of the goods owned by the user is information of the goods carried by the user.

4. The article information providing system as defined in any one of claims 1 to 3 wherein said portable terminal means includes position information acquisition means for acquiring the position information of said portable terminal means, said portable terminal means transmitting the position information acquired by said position information acquisition means along with said user's profile and information of goods owned by the user;
said coordination means receiving said position information over said network to provide the example of combination of the goods using said user's profile, information of goods and the position information received over said network.

5. The article information providing system as defined in claim 4 further comprising
information requesting means for requesting information of goods owned by said user and the position information of the portable terminal means; said portable terminal means on receipt of a request for the information from said information requesting means over said network transmitting said information of goods owned by the user over said network.

6. The article information providing system as defined in any one of claims 1 to 5 wherein said combination information transmitting means is responsive to the request received over said network to transmit the example of combination of the goods provided by said coordination means over said network to make advertisement.

7. The article information providing system as defined in any one of claims 1 to 6 further comprising
an advertiser terminal owned by an advertiser; and
market analysis means for acquiring said user's profile and the information of goods owned by the user from said portable terminal means, executing market analyses of articles of goods and transmitting the results of the market analyses over said network to said advertiser terminal.

8. The article information providing system as defined in any one of claims 1 to 7 wherein said portable terminal means transmits only a difference of information of goods or a difference of the position information over said network.

9. The article information providing system as defined in any one of claims 1 to 8 wherein said portable terminal means includes goods information readout means for reading out information of goods from a carrier of information of goods mounted on goods and wherein the information read out by said goods information readout means is transmitted over said network.

10. A article information providing server comprising
coordinating means including storage means for memorizing information of goods as information representing goods and condition of combination of the goods, said coordinating means providing an example of combination of the goods received over said network and the goods stored in said storage means, based on said condition of combination of goods, using said user's profile and information of goods owned by the user, received over said network; and combination information transmitting means for transmitting the example of combination of goods provided by said coordination means over said network.

11. The article information providing server as defined in claim 10 wherein information of the goods owned by the user are information of the goods carried by the user.

12. The article information providing server as defined in claim 10 or 11 wherein said coordination means further receives the user's position information over said network and provides an example of combination of the goods using said user's profile, information of the goods owned by the user and the user's position information, received over said network.

13. The article information providing server as defined in any one of claims 10 to 12 wherein said combination information transmitting means is responsive to a request received over said network to transmit the example of combination of the goods provided by said coordination means over said network to make advertisements.

14. The article information-providing server as defined in any one of claims 10 to 13 further comprising
market analysis means for acquiring said user's profile and information of goods owned by the user to execute market analyses of the articles and for transmitting the results of the market analyses over said network to an advertiser terminal owned by an advertiser.
